# EUROPEAN PATENT APPLICATION

(11) **EP 2 875 914 A1**
(43) Date of publication of application: **27.05.2015**
(21) Application number: 12881268.2
(22) Date of filing: 20.07.2012
(51) Int. Cl.: B25J 9/22

(54) **ROBOT SIMULATOR, ROBOT TEACHING DEVICE AND ROBOT TEACHING METHOD**

(71) Applicant: Kabushiki Kaisha Yaskawa Denki, Kitakyushu-shi, Fukuoka 806-0004 (JP)
(72) Inventor: SUYAMA, Takashi, Kitakyushu-shi Fukuoka 806-0004 (JP); UMENO, Makoto, Kitakyushu-shi Fukuoka 806-0004 (JP)
(74) Representative: Grünecker Patent- und Rechtsanwälte PartG mbB
(86) International application number: PCT/JP2012/068448
(87) International publication number: WO 2014/013605

(57) **Abstract**

A robot simulator (10) according to an aspect of an embodiment includes a display unit (12), an image generation unit (111a), a display controller (111b), and a simulation instruction unit (111e). The display unit (12) displays an image. The image generation unit (111a) generates a virtual image of a robot (30). The virtual image includes an operating handle capable of operating axes of a three-dimensional coordinate in which the origin is a certain control point of the robot (30). The display controller (111b) causes the display unit (12) to display the virtual image. The simulation instruction unit (111e) acquires, when an operation on the operating handle by an operator is received, a displacement amount of the control point and a rotation amount of the three-dimensional coordinate axes based on the operation, and causes the image generation unit (111a) to regenerate the virtual image of the robot (30) whose posture is changed according to the acquired displacement and rotation axmounts.

## Description

### Field

The embodiment disclosed herein relates to a robot simulator, a robot teaching device, and a robot teaching method.

### Background

Various types of robot simulators have been proposed that previously simulate and calculate the motion of a robot on the basis of teaching data created by causing the robot to perform, for example, certain processing work, and display graphics images of the robot on, for example, a display of a computer.

With these robot simulators, operators can create teaching data while checking whether the robot collides with the peripherals without depending on the actual operation of the robot.

The teaching data is created by using what is called a teach pendant that is a portable device dedicated to teaching the robot. In general, operating the teach pendant requires a certain level of skill and experience of the operator.

To facilitate the teaching of a robot, a method has more recently been developed in which touch keys describing directions of motion such as "up", "down", "left", and "right" are displayed around graphics images of the robot displayed on a touch panel so that the operator can teach the robot by pushing the touch keys (see Patent Literature 1, for example).

### Citation List

### Patent Literature

Patent Literature 1: Japanese Patent No. 3901772

### Summary

### Technical Problem

The conventional robot simulators have much room for improvement in that they can enable the operator to intuitively and easily perform operation irrespective of the skill or experience of the operator.

When, for example, a robot simulator displays touch keys describing directions of motion of a robot as described above, and the robot has multiple axes and is movable in multiple directions, many touch keys need to be displayed. This makes it all the more difficult for the operator to operate the robot simulator.

Moreover, the directions described by, for example, "left" or "right" as described above indicate relative directions, not absolute directions. This may prevent the operator from intuitively recognizing the direction of the robotic motion.

In view of the description above, it is an object of an aspect of the present embodiment to provide a robot simulator, a robot teaching device, and a robot teaching method that enable an operator to intuitively and easily perform operation irrespective of the skill or experience of the operator.

### Solution to Problem

A robot simulator according to an aspect of an embodiment includes a display unit, a generation unit, a display controller, and a simulation instruction unit. The generation unit generates a virtual image of a robot, the virtual image including an operating handle that is capable of operating axes of a three-dimensional coordinate in which an origin is a certain control point of the robot. The display controller causes the display unit to display the virtual image generated by the generation unit. The simulation instruction unit acquires, when an operation on the operating handle by an operator is received, an amount of displacement of the control point and an amount of rotation of the three-dimensional coordinate axes based on the operation, and causes the generation unit to regenerate the virtual image of the robot whose posture is changed in accordance with the acquired amount of displacement and the acquired amount of rotation.

### Advantageous Effects of Invention

According to an aspect of the embodiment, the operator can intuitively and easily perform operation irrespective of the skill or experience of the operator.

### Brief Description of Drawings

FIG. 1 is a schematic diagram illustrating the entire configuration of a robot system including a robot simulator according to an embodiment.
FIG. 2 is a block diagram illustrating a configuration of the robot simulator according to the embodiment.
FIG. 3 is a schematic diagram illustrating an example of a virtual image displayed on a display unit.
FIG. 4 is a diagram illustrating an example of a setting of control point information.
FIG. 5A is a diagram illustrating an example of an operating handle.
FIG. 5B is a diagram illustrating a displacement handle.
FIG. 5C is a diagram illustrating a rotation handle.
FIG. 6 is a diagram illustrating an operating handle according to a modification.
FIG. 7A is a first diagram illustrating a specific example of a simulated motion of a robot in a virtual image when a displacement handle is operated.
FIG. 7B is a second diagram illustrating a specific example of a simulated motion of the robot in the virtual image when the displacement handle is operated.
FIG. 7C is a third diagram illustrating a specific example of a simulated motion of the robot in the virtual image when the displacement handle is operated.
FIG. 8A is a first diagram illustrating a specific example of a simulated motion of the robot in a virtual image when a rotation handle is operated.
FIG. 8B is a second diagram illustrating a specific example of a simulated motion of the robot in the virtual image when the rotation handle is operated.
FIG. 8C is a third diagram illustrating a specific example of a simulated motion of the robot in the virtual image when the rotation handle is operated.

### Description of Embodiment

The following describes in detail an embodiment of a robot simulator, a robot teaching device, and a robot teaching method disclosed in the present invention with reference to the accompanying drawings. The embodiment described below is not intended to limit the scope of the present invention.

The following describes, as an example, a robot simulator that displays a three-dimensional computer graphics image of a robot on a display unit such as a display. The three-dimensional computer graphics image may be hereinafter referred to as a "virtual image".

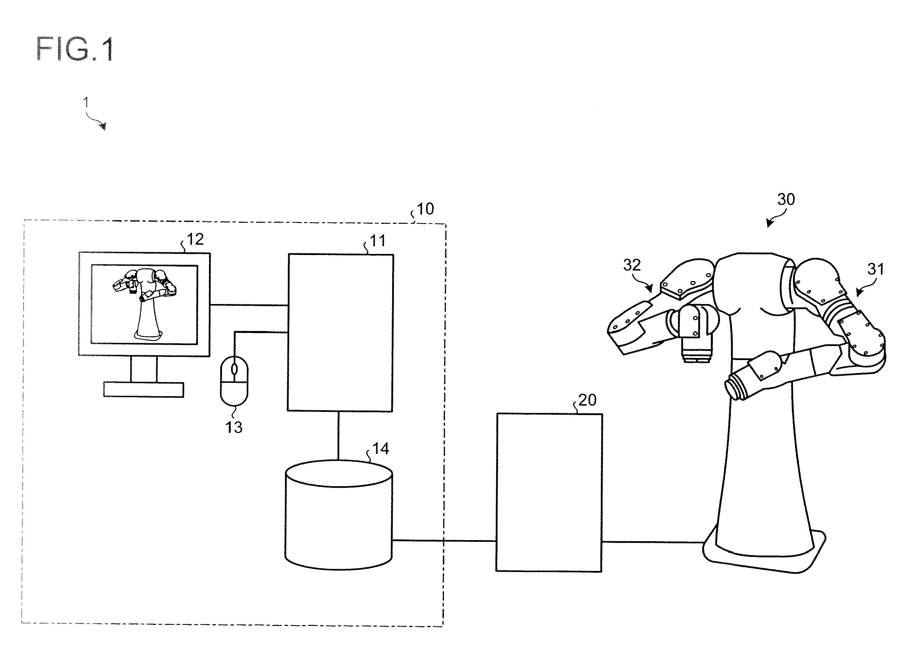

FIG. 1 is a schematic diagram illustrating the entire configuration of a robot system 1 including a robot simulator 10 according to the embodiment.

As illustrated in FIG. 1, the robot system 1 includes the robot simulator 10, a robot controller 20, and a robot 30. The robot simulator 10 includes a simulator controller 11, a display unit 12, an operating unit 13, and a teaching point information database (DB) 14.

The simulator controller 11 controls the entire robot simulator 10, and is configured by, for example, an arithmetic processing device and a storage device. The simulator controller 11 is communicably connected to each unit of the robot simulator 10 such as the display unit 12.

The simulator controller 11 outputs, to the display unit 12, a virtual image of the robot 30 whose simulated motion is calculated on the basis of an operation by an operator via the operating unit 13.

The simulator controller 11 also acquires teaching points of the robot 30 from the virtual image of the robot 30 on the basis of the operation by the operator via the operating unit 13, and registers the teaching points in the teaching point information DB 14.

The display unit 12 is a display device such as a display. The operating unit 13 is a pointing device such as a mouse. The operating unit 13 is not necessarily configured by a hardware component, but may be configured by a software component such as touch keys displayed on a touch screen, for example.

The teaching point information DB 14 stores therein information relating to teaching points of the robot 30.

The teaching points are information on a target posture of the robot 30 that the robot 30 needs to pass through when the robot 30 plays back the simulated motion, and are stored as a pulse count of encoders included in the robot 30, for example. Because the robot 30 operates on the basis of information on a plurality of teaching points, the teaching point information DB 14 stores therein a plurality of teaching points of each motion (job) of the robot 30 in a manner in which a motion of the robot 30 is associated with a plurality of teaching points.

In other words, a teaching program of the robot 30 includes combined information of a plurality of teaching points and interpolation commands between the teaching points, and operation commands on an end effector. The teaching point information DB 14 stores therein information on teaching points of each teaching program of the robot 30, and the robot 30 operates on the basis of the teaching program when the robot 30 plays back the simulated motion.

The teaching point information DB 14 is communicably connected to the robot controller 20 that controls the physical motion of the robot 30. The robot controller 20 controls various types of physical motions of the robot 30 on the basis of the teaching points registered in the teaching point information DB 14.

Although the teaching point information DB 14 and the simulator controller 11 are configured as separate units in the example of FIG. 1 to make description simple, the teaching point information DB 14 may be stored in a storage unit included in the simulator controller 11.

The robot 30 includes a first arm 31 and a second arm 32, and the first and the second arms 31 and 32 each include a plurality of joints for changing their positions, and actuators that actuate the joints. Each actuator includes a servo motor that drives a corresponding joint of the robot 30 on the basis of an operation instruction from the robot controller 20.

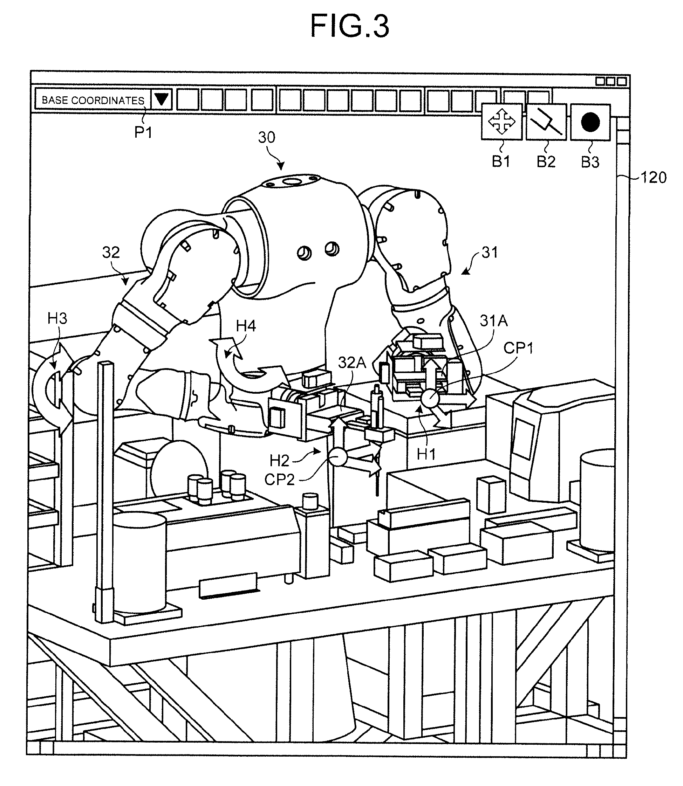

As illustrated in FIG. 3 to be referred to later, end parts of the first arm 31 and the second arm 32 are provided with a hand 31A and a hand 32A (grippers), respectively, as end effectors. The hand 31A and the hand 32A may hold a certain handling tool (hereinafter referred to as a tool) depending on the nature of the work the robot 30 performs.

Although the robot 30 is illustrated as a dual-arm robot having a pair of arms, the first arm 31 and the second arm 32, in the example of FIG. 1, the robot used in the robot system 1 may be a single-arm robot or a multi-arm robot having two or more arms.

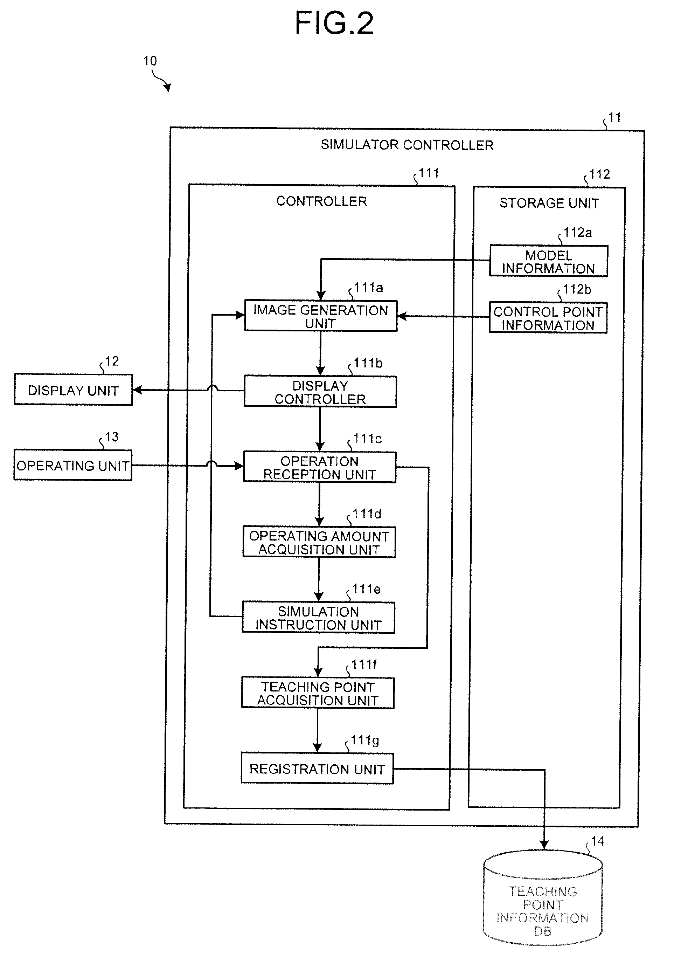

Described next is a block configuration of the robot simulator 10 according to the embodiment with reference to FIG. 2. FIG. 2 is a block diagram of the robot simulator 10 according to the embodiment. FIG. 2 only illustrates components necessary for the description of the robot simulator 10, and general components are omitted from FIG. 2.

The following mainly describes the internal configuration of the simulator controller 11 with reference to FIG. 2, and description of the display unit 12, the operating unit 13, and the teaching point information DB 14 already described with reference to FIG. 1 may be simplified herein.

As illustrated in FIG. 2, the simulator controller 11 includes a controller 111 and a storage unit 112. The controller 111 includes an image generation unit 111a, a display controller 111b, an operation reception unit 111c, an operating amount acquisition unit 111d, a simulation instruction unit 111e, a teaching point acquisition unit 111f, and a registration unit 111g. The storage unit 112 stores therein model information 112a and control point information 112b.

The image generation unit 111a generates a virtual image of the robot 30 on the basis of the model information 112a and the control point information 112b. The model information 112a contains drawing information defined in advance according to the type of the robot 30.

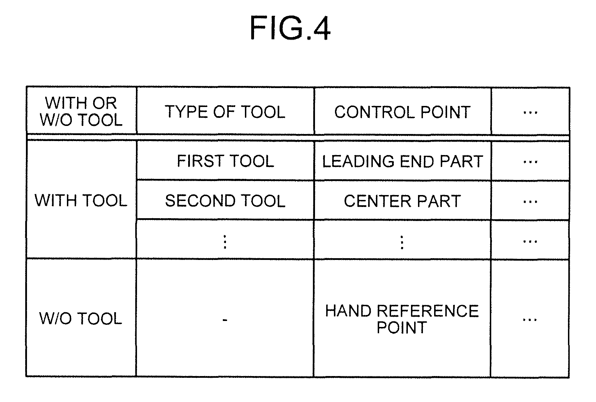

The control point information 112b defines in advance a control point of the robot 30. The image generation unit 111a generates a virtual image of the robot 30 that includes an operating handle (to be described later) that is capable of operating axes of a three-dimensional coordinate in which the origin is the control point of the robot 30. The detail of the control point information 112b will be described later with reference to FIG. 4.

The image generation unit 111a outputs the generated virtual image of the robot 30 to the display controller 111b. The display controller 111b causes the display unit 12 to display the virtual image of the robot 30 received from the image generation unit 111a.

Described here is an example of a virtual image of the robot 30 generated by the image generation unit 111a and displayed on the display unit 12 via the display controller 111b with reference to FIG. 3.

FIG. 3 is a schematic diagram illustrating an example of a virtual image of the robot 30 displayed on the display unit 12. As illustrated in FIG. 3, the virtual image of the robot 30 is displayed on a display window 120 that is one of display areas of the display unit 12.

As illustrated in FIG. 3, the virtual image of the robot 30 includes a certain control point and an operating handle that is capable of operating the axes of the three-dimensional coordinate in which the origin is the control point.

FIG. 3 illustrates, for example, a virtual image of the robot 30 including a control point CP1 and a control point CP2, and an operating handle H1 for operating three-dimensional coordinate axes with the origin being the control point CP1, and an operating handle H2 for operating three-dimensional coordinate axes with the origin being the control point CP2. The operating handles H1 and H2 are operational objects that can be operated by, for example, a drag operation by the operator via the operating unit 13.

The position of a certain control point such as the control points CP1 and CP2 is defined by the control point information 112b described above. Described next is an example of a setting of the control point information 112b with reference to FIG. 4.

FIG. 4 is a diagram illustrating an example of a setting of the control point information 112b. As illustrated in FIG. 4, the control point information 112b includes, for example, items of "with or without tool", items of "type of tool", and items of "control point". Although, in FIG. 4, the data of each item is described in text to make description simple, this is not intended to limit the format of the data to be stored.

In the items of "with or without tool", data is stored that determines whether a tool is held by the hand 31A and the hand 32A, that is, whether the robot 30 operates "with tool" or "without tool".

In the items of "type of tool", data is stored indicating types of tools. In the items of "control point", data (such as coordinate values indicating a position of a control point relative to the hand 31A or the hand 32A) is stored indicating a control point corresponding to a type of a tool.

In the example illustrated in FIG. 3, when it is assumed that a "first tool" is held by the hand 31A and the hand 32A, a "leading end part" of the "first tool" is determined to be a certain control point.

When it is assumed that a "second tool" is held by the hand 31A and the hand 32A, a "center part" of the "second tool" is determined to be a certain control point.

In the case of "without tool", a "hand reference point" set in advance is determined to be a certain control point.

In other words, the control point information 112b is a database that associates a type of a tool used by the robot 30 with a control point set in advance in accordance with the type of the tool.

The image generation unit 111a described above acquires a control point corresponding to a type of a tool assumed to be used by the robot 30 from the control point information 112b, and generates a virtual image of the robot 30 on the basis of the acquired control point.

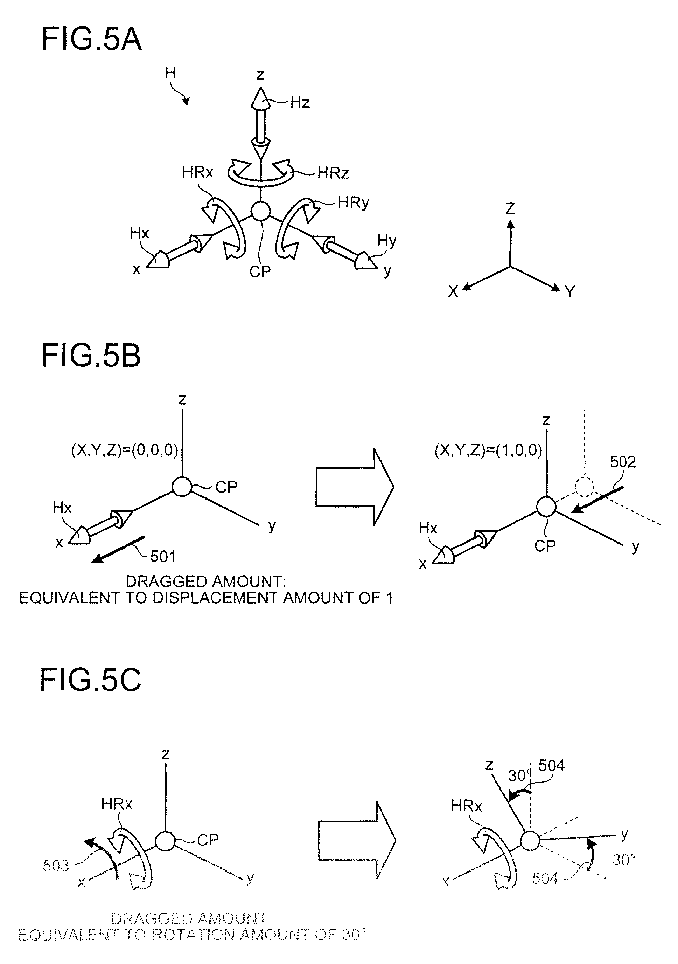

The detail of the operating handle generated with the origin being the acquired control point will be described later with reference to FIGS. 5A to 6.

The description returns to FIG. 3. As illustrated in FIG. 3, the virtual image of the robot 30 also includes an operating handle H3 that operates an angle of an elbow of the robot 30 and an operating handle H4 that operates the rotation axis of the waist of the robot 30. The operating handles H3 and H4 are also operational objects that can be operated by the operator via the operating unit 13.

The operator operates the operating handles H1 to

H4 via the operating unit 13 to give simulation instructions to the robot 30 in the virtual image to perform a simulated motion. Specific examples of this will be described later with reference to FIGS. 5A to 8C.

As illustrated in FIG. 3, the virtual image of the robot 30 can include peripherals of the robot 30. With this configuration, when the operator causes the robot 30 in the virtual image to perform a simulated motion, the operator can check whether the robot 30 collides with the peripherals.

As illustrated in FIG. 3, the display window 120 is provided with input buttons B1 to B3. The input buttons B1 to B3 are also operational objects that can be operated by the operator via the operating unit 13.

For example, a function of switching display and non-display of the operating handles H1 to H4 may be assigned to the input button B1. For example, a function of displaying a tool name may be assigned to the input button B2.

For example, a registration function may be assigned to the input button B3 for registering the posture of the robot 30 as teaching points in the teaching point information DB 14 at the time at which the input button B3 is pushed.

As illustrated in FIG. 3, the display window 120 is also provided with a pull-down menu P1. To the pull-down menu P1, a function of switching coordinate systems (such as base coordinates, robot coordinates, or tool coordinates) of the virtual image of the robot 30 may be assigned.

When the operator selects a desired coordinate system from the pull-down menu P1, the image generation unit 111a generates a virtual image of the robot 30 in accordance with the selected coordinate system.

The shape of the operating handles H1 to H4 may be switched depending on the selected coordinate system so that the operator can intuitively recognize the handles and can easily operate them. In addition, display and non-display of the peripherals of the robot 30 may also be switched.

The description returns to FIG. 2. The following describes the operation reception unit 111c of the simulator controller 11. The operation reception unit 111c receives an input operation of the operator via the operating unit 13. When the input operation relates to a simulation instruction, the operation reception unit 111c notifies the operating amount acquisition unit 111d of the received input operation. The input operation relating to a simulation instruction described herein corresponds to the operation on the operating handles H1 to H4 in the example of FIG. 3 described above.

When the input operation relates to an instruction to register teaching points, the operation reception unit 111c notifies the teaching point acquisition unit 111f of the received input operation. The input operation relating to an instruction to register teaching points described herein corresponds to the operation on the input button B3 in the example of FIG. 3 described above.

The operating amount acquisition unit 111d analyzes the content of the input operation notified by the operation reception unit 111c, and acquires an amount of displacement of a control point and an amount of rotation of three-dimensional coordinate axes with the origin being the control point. The operating amount acquisition unit 111d notifies the simulation instruction unit 111e of the acquired amounts of displacement and rotation.

The simulation instruction unit 111e notifies the image generation unit 111a of a simulation instruction that causes the image generation unit 111a to regenerate the virtual image of the robot 30 whose posture is changed in accordance with the amount of displacement and the amount of rotation notified by the operating amount acquisition unit 111d.

The image generation unit 111a regenerates the virtual image of the robot 30 on the basis of the simulation instruction received from the simulation instruction unit 111e, and the regenerated virtual image is displayed on the display unit 12 via the display controller 111b. By these processes described above, the robot 30 in the virtual image performs continuously changing simulated motion.

Described next are a specific operation on an operating handle and the resulting simulated motion of the robot 30 in the virtual image with reference to FIGS. 5A to 8C. First, a specific example of the operating handle is described with reference to FIGS. 5A to 5C. In the following description, a reference sign "H" is given to the operating handle, and a reference sign "CP" is given to the control point.

FIG. 5A is a diagram illustrating an example of an operating handle H. FIG. 5B is a diagram illustrating a displacement handle Hx. FIG. 5C is a diagram illustrating a rotation handle HRx.

In FIG. 5A, three-dimensional XYZ coordinate axes are illustrated, where X, Y, and Z are all capital letters. The XYZ coordinate axes are, for example, what is called the world coordinate system that represents the whole space. The coordinate system of the operating handle H to be described below is represented by xyz coordinate axes that represent a local coordinate system different from the world coordinate system. To make description simple, it is assumed that the x-axis, the y-axis, and the z-axis are parallel to the X-axis, the Y-axis, and the Z-axis, respectively.

As illustrated in FIG. 5A, the operating handle H is an operational object used for operating the xyz coordinate axes with the origin being a control point CP. The operating handle H includes displacement handles Hx, Hy, and Hz each displacing the control point CP in the direction along a corresponding axis of the xyz coordinate axes.

The displacement handles Hx, Hy, and Hz each have a solid double-pointed-arrow shape along the direction of a corresponding axis of the xyz coordinate axes. The displacement handles Hx, Hy, and Hz are each disposed in a position separated from the control point CP.

As illustrated in FIG. 5A, the operating handle H includes rotation handles HRx, HRy, and HRz each rotating the corresponding axis of the xyz coordinate axes about the coordinate axis.

The rotation handles HRx, HRy, and HRz each have a solid double-pointed-arrow shape around a corresponding axis of the xyz coordinate axes.

Described here is the displacement handle Hx with reference to FIG. 5B, and described is a specific example with regard to a case in which the displacement handle Hx is operated. In FIG. 5B, illustrations of the displacement handles Hy and Hz and the rotation handles HRx, HRy and HRz are omitted.

As illustrated in FIG. 5B, the displacement handle Hx is operated by a drag operation by the operator via the operating unit 13 (see an arrow 501 in FIG. 5B). The displacement handle Hx can be dragged along the x-axis direction corresponding to the displacement handle Hx.

As illustrated in FIG. 5B, when a dragged amount of the drag operation indicated by the arrow 501 corresponds to a displacement amount of 1, for example, the image generation unit 111a displaces the control point CP and the xyz coordinate axes with the origin being the control point CP by 1 in the direction along the x-axis (see an arrow 502 in FIG. 5B).

In other words, in this case, when the coordinate values of the control point CP before displacement are (X, Y, Z) = (0, 0, 0) on the XYZ coordinate axes (see FIG. 5A), the coordinate values of the control point CP is changed to (X, Y, Z) = (1, 0, 0) after the displacement. The xyz coordinate axes are created with the origin being the control point CP after the displacement, accordingly.

The image generation unit 111a regenerates the virtual image of the robot 30 on the basis of the control point CP and the xyz coordinate axes after the displacement to cause the robot 30 in the virtual image to perform a simulated motion.

The displacement handle Hx can also be dragged in the opposite direction of the arrow 501 in FIG. 5B as indicated by the solid double-pointed-arrow shape of the displacement handle Hx.

Although not illustrated in FIG. 5B, the displacement handles Hy and Hz also displace the control point CP and the xyz coordinate axes with the origin being the control point CP in the directions along the y-axis and the z-axis, respectively, by being dragged by the operator in the same manner as in the case of the displacement handle Hx.

Described next is the rotation handle HRx with reference to FIG. 5C, and described is a specific example with regard to a case in which the rotation handle HRx is operated. In FIG. 5C, illustrations of the displacement handles Hx, Hy, and Hz and the rotation handles HRy and HRz are omitted.

As illustrated in FIG. 5C, the rotation handle HRx is also operated by a drag operation by the operator via the operating unit 13 (see an arrow 503 in FIG. 5C). The rotation handle HRx can be dragged in the direction around the x-axis corresponding to the rotation handle HRx.

As illustrated in FIG. 5C, when a dragged amount of the drag operation indicated by the arrow 503 corresponds to a rotation amount of 30 degrees, for example, the image generation unit 111a rotates the xyz coordinate axes by 30 degrees around the x-axis (see arrows 504 in FIG. 5C).

The image generation unit 111a regenerates the virtual image of the robot 30 on the basis of the xyz coordinate axes after the rotation to cause the robot 30 in the virtual image to perform a simulated motion.

The rotation handle HRx can also be dragged in the opposite direction of the arrow 503 in FIG. 5C as indicated by the solid double-pointed-arrow shape of the rotation handle HRx. In this case, the xyz coordinate axes are rotated in the direction opposite to the direction illustrated in the example of FIG. 5C.

Although not illustrated in FIG. 5C, the rotation handles HRy and HRz also rotate the xyz coordinate axes about the y-axis and the z-axis, respectively, by being dragged by the operator in the same manner as in the case of the rotation handle HRx.

As described above, the operating handle H includes the displacement handles Hx, Hy, and Hz and the rotation handles HRx, HRy, and HRz corresponding to the xyz coordinate axes with the origin being the control point CP, respectively, and each having a shape of a double-pointed arrow. With these handles, the operator can intuitively and easily perform operation irrespective of the skill or experience of the operator.

The shape of the operating handle H is not limited to the example illustrated in FIG. 5A. The shape of the displacement handles Hx, Hy, and Hz and the rotation handles HRx, HRy, and HRz may be a single-pointed arrow, for example.

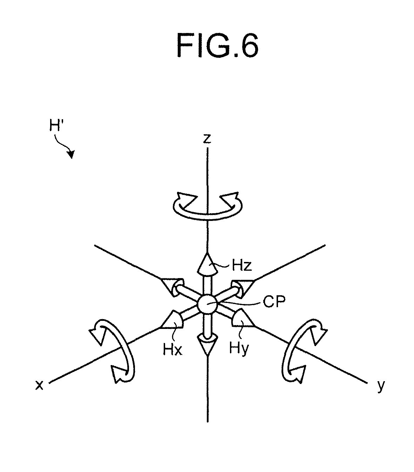

As illustrated in FIG. 6 that is a diagram illustrating an operating handle H' according to a modification, the displacement handles Hx, Hy, and Hz may be disposed such that they intersect with each other at the control point CP. With the operating handle H' according to the modification, the operator can intuitively and easily perform operation irrespective of the skill or experience of the operator in the same manner as in the case of the operating handle H illustrated in FIG. 5A.

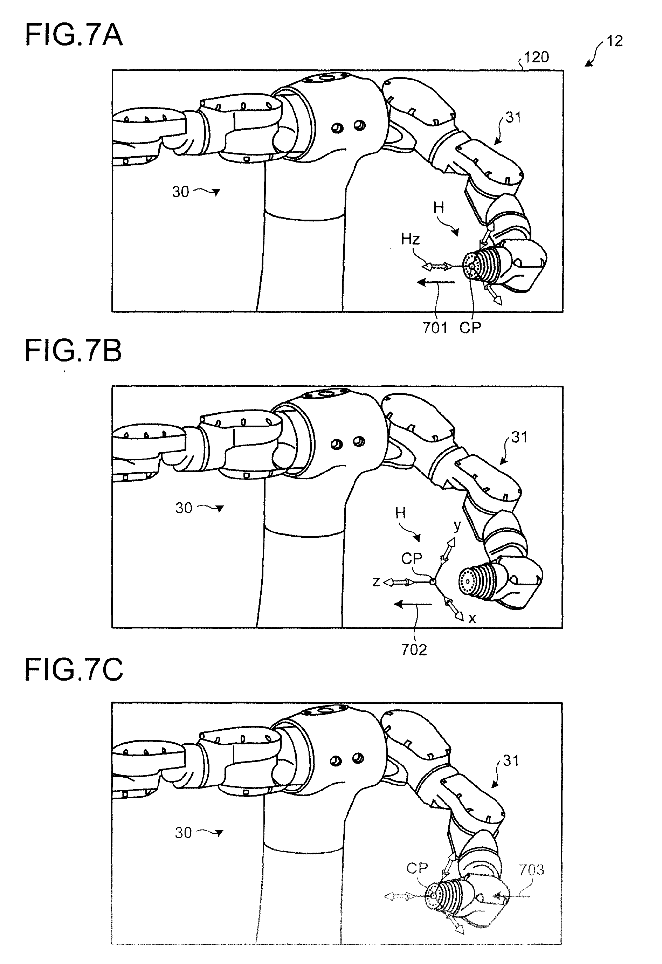

Described next is a specific example of a simulated motion performed by the robot 30 in a virtual image when the displacement handle Hz of the operating handle H (see FIG. 5A) is operated with reference to FIGS. 7A to 7C. FIGS. 7A to 7C are diagrams illustrating a specific example of a simulated motion performed by the robot 30 in a virtual image when the displacement handle Hz is operated.

In FIGS. 7A to 7C, it is assumed that the center part of the end moving part of the first arm 31 included in the robot 30 is defined as the control point CP. To make description simple, illustrations of the rotation handles HRx, HRy, and HRz are omitted from FIGS. 7A to 7C.

As illustrated in FIG. 7A, it is assumed that the display window 120 of the display unit 12 displays a virtual image of the robot 30 and that the displacement handle Hz is dragged by the operator in the direction indicated by an arrow 701 in FIG. 7A.

In this case, as illustrated in FIG. 7B, the operating handle H is displaced in the direction along the z-axis (see an arrow 702 in FIG. 7B) by a displacement amount corresponding to a dragged amount of the drag operation by the operator. In other words, the control point CP and the xyz coordinate axes with the origin being the control point CP are temporarily separated, as a whole, from the end moving part of the first arm 31, and are displaced in the direction along the z-axis.

As illustrated in FIG. 7C, the end moving part of the first arm 31 moves toward the control point CP so that the center part of the end moving part agrees with the control point CP as before. In other words, a virtual image of the robot 30 performing a simulated motion is illustrated in which the robot 30 moves the first arm 31 in the direction of an arrow 703 in FIG. 7C.

Although FIGS. 7A to 7C illustrate an example of a simulated motion in the case of operating the displacement handle Hz, it is apparent that, when the displacement handles Hx and Hy are operated, the same kind of simulated motion is illustrated with respect to the corresponding x-axis and the y-axis.

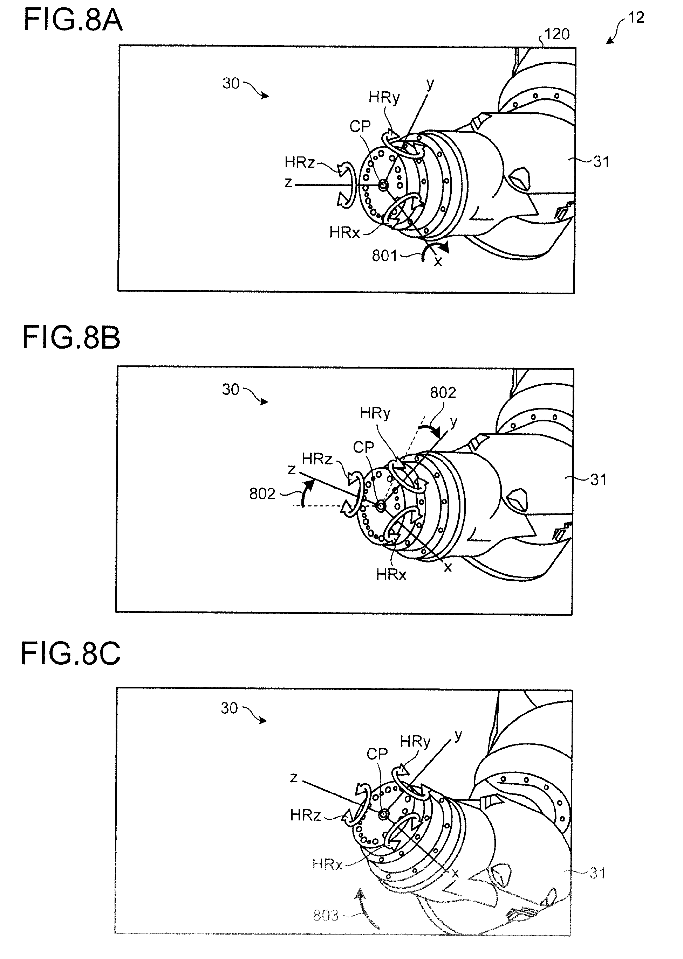

Described next is a specific example of a simulated motion performed by the robot 30 in a virtual image when the rotation handle HRx of the operating handle H is operated with reference to FIGS. 8A to 8C. FIGS. 8A to 8C are diagrams illustrating a specific example of a simulated motion performed by the robot 30 in a virtual image when the rotation handle HRx is operated.

In FIGS. 8A to 8C, it is also assumed that the center part of the end moving part of the first arm 31 is defined as the control point CP. To make description simple, illustrations of the displacement handles Hx, Hy, and Hz are omitted from FIGS. 8A to 8C.

As illustrated in FIG. 8A, it is assumed that the display window 120 of the display unit 12 displays a virtual image of the robot 30 (mainly the first arm 31) and that the rotation handle HRx is dragged by the operator in the direction indicated by an arrow 801 in FIG. 8A.

In this case, as illustrated in FIG. 8B, the xyz coordinate axes are rotated about the x-axis (see arrows 802 in FIG. 8B) by a rotation amount corresponding to a dragged amount of the drag operation by the operator.

As illustrated in FIG. 8C, the end moving part of the first arm 31 is illustrated such that it follows the rotation of the xyz coordinate axes. In other words, a virtual image of the first arm 31 performing a simulated motion is illustrated in which the orientation of the end moving part is changed in the direction along an arrow 803 in FIG. 8C.

Although FIGS. 8A to 8C illustrate an example of a simulated motion in the case of operating the rotation handle HRx, it is apparent that, when the rotation handles HRy and HRz are operated, the same kind of simulated motion is illustrated with respect to the corresponding y-axis and the z-axis.

The description returns to FIG. 2. Described is the teaching point acquisition unit 111f of the simulator controller 11. The teaching point acquisition unit 111f receives a notification from the operation reception unit 111c notifying that the input button B3 (see FIG. 3) is pushed, and acquires the posture of the robot 30 in the virtual image as teaching points at the time at which the input button B3 is pushed.

The teaching point acquisition unit 111f notifies the registration unit 111g of the acquired teaching points. The registration unit 111g registers the teaching points received from the teaching point acquisition unit 111f in the teaching point information DB 14.

As described above, the robot controller 20 controls various types of physical motions of the robot 30 on the basis of the teaching points registered in the teaching point information DB 14. Thus, the teaching point acquisition unit 111f and the registration unit 111g may be referred to as a "teaching unit" that teaches the robot 30 via the teaching point information DB 14.

The storage unit 112 is a storage device such as a hard disk drive or a non-volatile memory, and stores therein the model information 112a and the control point information 112b. The details of the model information 112a and the control point information 112b have already been described, and thus the description thereof is omitted.

Although, in the description with reference to FIG. 2, an example is described in which the simulator controller 11 generates the virtual image of the robot 30 on the basis of the model information 112a and the control point information 112b that are registered in advance, the simulator controller 11 may acquire, as necessary, information required for generating the virtual image from a host device that is mutually communicably connected with the simulator controller 11.

As described above, the robot simulator according to the embodiment includes a display unit, an image generation unit (generation unit), a display controller, and a simulation instruction unit. The display unit displays an image. The image generation unit generates a virtual image of a robot. The virtual image includes an operating handle that is capable of operating three-dimensional coordinate axes with the origin being a certain control point of the robot. The display controller causes the display unit to display the virtual image generated by the image generation unit. The simulation instruction unit acquires, when an operation on the operating handle by an operator is received, an amount of displacement of the control point and an amount of rotation of the three-dimensional coordinate axes based on the operation, and causes the image generation unit to regenerate the virtual image of the robot whose posture is changed in accordance with the acquired amounts of displacement and rotation.

The robot simulator according to the embodiment enables the operator to intuitively and easily perform operation irrespective of the skill or experience of the operator.

Although, in the above embodiment, a robot simulator is described, as an example, that acquires the posture of a robot in a virtual image as teaching points and can register the teaching points as teaching point information, such a robot simulator may be configured as a robot teaching device.

Although, in the above embodiment, a case is described in which a simulated motion is performed only in a virtual image, the simulated motion may be physically performed by the robot in accordance with an operation on the operating handle by the operator.

Although, in the above embodiment, a multi-axis robot having two arms is described as an example, the description is not intended to limit the number of arms or axes of the robot, nor intended to specify the type of the robot or the shape of the robot.

Although, in the above embodiment, a case is described in which a mouse is mainly used as the operating unit and the operating handle is dragged with the mouse, the embodiment is not limited to this. The display unit may be configured, for example, by a touch panel that supports multi-touch operation and the operating handle may be dragged by a multi-touch operation of the operator on the touch panel.

Although, in the above embodiment, a case is described in which the virtual image is a three-dimensional computer graphics image, the description is not intended to limit the dimension of the virtual image, and the virtual image may be a two-dimensional image.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

- 1: Robot system
- 10: Robot simulator
- 11: Simulator controller
- 12: Display unit
- 13: Operating unit
- 14: Teaching point information DB
- 20: Robot controller
- 30: Robot
- 31: First arm
- 31A: Hand
- 32: Second arm
- 32A: Hand
- 111: Controller
- 111a: Image generation unit
- 111b: Display controller
- 111c: Operation reception unit
- 111d: Operating amount acquisition unit
- 111e: Simulation instruction unit
- 111f: Teaching point acquisition unit
- 111g: Registration unit
- 112: Storage unit
- 112a: Model information
- 112b: Control point information
- 120: Display window
- B1, B2, B3: Input button
- CP, CP1, CP2: Control point
- H, H1, H2, H3, H4: Operating handle
- HRx, HRy, HRz: Rotation handle
- Hx, Hy, Hz: Displacement handle
- P1: Pull-down menu

## Claims

1. A robot simulator comprising:
a display unit;
a generation unit that generates a virtual image of a robot, the virtual image including an operating handle that is capable of operating axes of a three-dimensional coordinate in which an origin is a certain control point of the robot;
a display controller that causes the display unit to display the virtual image generated by the generation unit; and
a simulation instruction unit that acquires, when an operation on the operating handle by an operator is received, an amount of displacement of the control point and an amount of rotation of the three-dimensional coordinate axes based on the operation, and causes the generation unit to regenerate the virtual image of the robot whose posture is changed in accordance with the acquired amount of displacement and the acquired amount of rotation.

2. The robot simulator according to claim 1, further comprising a storage unit that stores therein control point information that associates a type of a handling tool to be used by the robot with the control point set in advance in accordance with the type, wherein
the generation unit acquires the control point corresponding to the type of the handling tool assumed to be used by the robot from the control point information, and generates the virtual image based on the acquired control point.

3. The robot simulator according to claim 1 or 2, wherein the operating handle includes displacement handles each displacing the control point in a direction along a corresponding axis of the three-dimensional coordinate axes, and rotation handles each rotating a corresponding axis of the three-dimensional coordinate axes about the corresponding three-dimensional coordinate axis.

4. The robot simulator according to claim 3, wherein the displacement handles each have a shape of a double-pointed arrow along the direction of the corresponding axis of the three-dimensional coordinate axes, and are each disposed at a position separated from the control point.

5. The robot simulator according to claim 3, wherein the displacement handles each have a shape of a double-pointed arrow along the direction of the corresponding axis of the three-dimensional coordinate axes, and are disposed to intersect with each other at the control point.

6. The robot simulator according to claim 2, wherein
the storage unit further stores therein teaching point information that associates a posture of the robot in the virtual image with teaching points of the robot,
the virtual image further includes an input button, and
the robot simulator further comprises a registration unit that registers, when the input button is pushed by the operator, the posture of the robot as the teaching points in the teaching point information at time at which the input button is pushed.

7. The robot simulator according to claim 1, wherein the operating handle is operated by a drag operation by the operator.

8. A robot teaching device comprising:
a display unit;
a generation unit that generates a virtual image of a robot, the virtual image including an operating handle that is capable of operating axes of a three-dimensional coordinate in which an origin is a certain control point of the robot;
a display controller that causes the display unit to display the virtual image generated by the generation unit;
a simulation instruction unit that acquires, when an operation on the operating handle by an operator is received, an amount of displacement of the control point and an amount of rotation of the three-dimensional coordinate axes based on the operation, and causes the generation unit to regenerate the virtual image of the robot whose posture is changed in accordance with the acquired amount of displacement and the acquired amount of rotation;
a storage unit that stores therein teaching point information that associates the posture of the robot in the virtual image at a certain time with teaching points of the robot; and
a teaching unit that teaches the robot on the basis of the teaching point information stored in the storage unit.

9. A robot teaching method comprising:
generating a virtual image of a robot, the virtual image including an operating handle that is capable of operating axes of a three-dimensional coordinate in which an origin is a certain control point of the robot;
causing a display unit to display the virtual image generated at the generating;
acquiring, when an operation on the operating handle by an operator is received, an amount of displacement of the control point and an amount of rotation of the three-dimensional coordinate axes based on the operation, and regenerating the virtual image of the robot whose posture is changed in accordance with the acquired amount of displacement and the acquired amount of rotation;
storing teaching point information that associates the posture of the robot in the virtual image at a certain time with teaching points of the robot; and
teaching the robot on the basis of the teaching point information stored at the storing.
